# EUROPEAN PATENT APPLICATION

(11) **EP 4 632 215 A1**
(43) Date of publication of application: **15.10.2025**
(21) Application number: 23943215.6
(22) Date of filing: 07.10.2023
(51) Int. Cl.: F02M 35/10, F02M 35/024, F02M 35/04, F16L 37/248

(54) **AIR INTAKE PIPE STRUCTURE OF ALL-TERRAIN VEHICLE**

(30) Priority: 26.06.2023 CN 202321639594 U
(71) Applicant: Zhejiang Qianjiang Motorcycle Co., Ltd., Taizhou, Zhejiang 317500 (CN)
(72) Inventor: CHEN, Dongdong, Wenling City Taizhou, Zhejiang 317500 (CN); DENG, Dinghong, Wenling City Taizhou, Zhejiang 317500 (CN); LIN, Weiwei, Wenling City Taizhou, Zhejiang 317500 (CN)
(74) Representative: Elzaburu S.L.P.
(86) International application number: PCT/CN2023/123124
(87) International publication number: WO 2025/000736

(57) **Abstract**

Provided is an intake pipe structure of an all-terrain vehicle, which belongs to the technical field of parts of all-terrain vehicles. The present disclosure solves the problem of poor stability of a connection between a filter sleeve and a pipe body of an intake pipe in the prior art. The intake pipe structure of the all-terrain vehicle includes a pipe body and a filter sleeve arranged on the pipe body, where a plurality of positioning grooves are provided on the pipe body, a plurality of positioning blocks are arranged on the filter sleeve, the plurality of positioning grooves are distributed on an outer wall of an intake end of the pipe body in a circumferential direction, the plurality of positioning blocks are distributed on an inner wall of the filter sleeve in a circumferential direction, the positioning blocks can be embedded in or separated from the positioning grooves, and by rotationally adjusting relative positions of the positioning blocks and the positioning grooves, a locked state or an unlocked state can be formed between them. The present disclosure has the advantage that stability of a connection between the filter sleeve and the pipe body of the intake pipe is improved while disassembly and assembly are facilitated.

## Description

### Technical field

The present disclosure belongs to the technical field of parts of all-terrain vehicles, and relates to an intake pipe structure of an all-terrain vehicle.

### Background

At present, a filter sleeve is generally mounted at an intake end of an intake pipe of an all-terrain vehicle, so as to filter dust and other impurities in the air. Further, unstable work of a machine and an impact on service life of the machine caused when a piston is stained with particulate impurities can be avoided. Generally, the existing filter sleeve is fixedly connected to the intake pipe by a steel belt type hoop. However, since the vehicle vibrates when running, the hoop will suffer from vibration fatigue and become loosened over time. As a result, stability of a connection between the filter sleeve and a pipe body of the intake pipe will be affected.

### Summary

An objective of the present disclosure is to provide an intake pipe structure of an all-terrain vehicle, so as to solve the above problem in the prior art. The technical problem to be solved by the present disclosure is how to improve stability of a connection between a filter sleeve and a pipe body of an intake pipe while disassembly and assembly are facilitated.

The objective of the present disclosure can be achieved by a technical solution as follows:
An intake pipe structure of an all-terrain vehicle includes a pipe body and a filter sleeve arranged on the pipe body. A plurality of positioning grooves are provided on the pipe body. A plurality of positioning blocks are arranged on the filter sleeve. The plurality of positioning grooves are distributed on an outer wall of an intake end of the pipe body in a circumferential direction. The plurality of positioning blocks are distributed on an inner wall of the filter sleeve in a circumferential direction. The positioning blocks are capable of being embedded in or separated from the positioning grooves. By rotationally adjusting relative positions of the positioning blocks and the positioning grooves, a locked state or an unlocked state is capable of being formed between them.

Different from a structure fixed by a steel belt type hoop in the prior art, the intake pipe structure of an all-terrain vehicle is implemented by using a twist-lock buckle structure. That is, by rotationally adjusting the relative positions of the positioning blocks and the positioning grooves, the positioning blocks and the positioning grooves can form a locked state or an unlocked state. In the locked state, the positioning blocks are embedded in the positioning grooves such that the pipe body of the intake pipe and the filter sleeve can be stably connected and cannot be loosened and separated from each other in a situation of vibration. Moreover, noise caused by an unstable connection between the pipe body of the intake pipe and the filter sleeve can be avoided.

In the unlocked state, through reverse rotation, the positioning blocks are separated from the positioning grooves such that disassembly and assembly can be facilitated.

In the above intake pipe structure of an all-terrain vehicle, the positioning groove includes an L-shaped guide section and a linear locking section connected to each other. A width of the locking section is gradually narrowed from an inlet. An inlet of the guide section extends to an edge of the intake end of the pipe body. The guide section is L-shaped and the inlet of the guide section extends to the edge of the intake end of the pipe body such that the positioning blocks can conveniently enter the positioning grooves. Moreover, after the positioning blocks enter the positioning grooves, since the width of the locking section connected to the guide section is gradually narrowed from the inlet, groove walls of the locking sections can clamp the positioning blocks in an axial direction. Thus, by rotationally adjusting the relative positions of the positioning blocks and the positioning grooves, the positioning blocks and the positioning grooves can form a locked state or an unlocked state such that disassembly and assembly can be facilitated.

In the above intake pipe structure of an all-terrain vehicle, an inlet end of the locking section is opened, and the other end is closed. An end wall of the closed end is inclined relative to a groove bottom of the locking section. A snap-fit groove is recessed at a joint between them. The positioning block is provided with a positioning portion which is capable of being embedded in the snap-fit groove. The positioning portion is capable of being separated from the snap-fit groove under an action of an external force. The inlet end of the locking section is opened such that the positioning blocks can conveniently enter the positioning grooves. The other end of the locking section is closed such that the positioning blocks entering the positioning grooves can be blocked in a circumferential direction. The positioning blocks are abutted against the end walls of the closed ends, and the positioning portions of the positioning blocks are embedded in snap-fit grooves of the positioning grooves, such that the positioning blocks and the positioning grooves are in tight snap-fit with each other in a radial direction, and a locked effect of the positioning blocks and the positioning grooves can be better. Based on this, the positioning blocks can be snap-fitted and limited in a circumferential direction, an axial direction and a radial direction such that a connection between the entire filter sleeve and the pipe body of the intake pipe can be more stable.

In the above intake pipe structure of an all-terrain vehicle, the positioning block is provided with inclined surfaces located on two sides of the positioning portion respectively. A cambered snap-fit surface is arranged at a joint between the snap-fit groove and the groove bottom of the locking section. When the positioning portion is embedded in the snap-fit groove, one side wall of the positioning block abuts against the end wall of the closed end of the locking section, and the other side wall abuts against the snap-fit surface. When the positioning portion is embedded in the snap-fit groove, the inclined surfaces of the positioning block located on the two sides of the positioning portion abut against the end wall of the closed end of the locking section and the snap-fit surface respectively. Moreover, the pipe body is in small interference fit with the filter sleeve arranged on the pipe body. The snap-fit surface is actually a curved surface having an inclined radian. Thus, since the two inclined surfaces abut against and match the closed end and the snap-fit surface respectively, left-right limitation in a circumferential direction and abut-against limitation in a radial direction can be ensured, and the locked effect of the positioning blocks and the positioning grooves can be better. Moreover, since one inclined surface of the positioning block abuts against the cambered snap-fit surface, under an action of an external force, the positioning portion can go over the snap-fit surface to be separated from the snap-fit groove. When the positioning portion enters the snap-fit groove, a hand feeling of operation can be produced, and whether the filter sleeve and the pipe body of the intake pipe are connected in place can be distinguished. Thus, the cambered snap-fit surface herein can achieve three effects. In the above intake pipe structure of an all-terrain vehicle, a mounting groove is recessed on the outer wall of the intake end of the pipe body. The mounting groove is located beside the plurality of positioning grooves. A sealing ring is arranged in the mounting groove. The sealing ring abuts against the inner wall of the filter sleeve. After the filter sleeve is connected to the pipe body of the intake pipe, the sealing ring located beside the plurality of positioning grooves can prevent the air containing impurities from entering from gaps between the positioning grooves of the pipe body of the intake pipe and the filter sleeve, thereby ensuring that the air entering from the intake pipe is filtered by the filter sleeve. In addition, the sealing ring has relatively large friction resistance. Since the sealing ring abuts against the inner wall of the filter sleeve instead of an upper surface or a lower surface, and a direction of the friction resistance is consistent with a sliding direction in which the positioning blocks are separated from the positioning grooves, the sealing ring can provide further guarantee for stability of a connection between the filter sleeve and the pipe body of the intake pipe in use.

Compared with the prior art, the intake pipe structure of an all-terrain vehicle has advantages as follows: 1. The intake pipe structure of an all-terrain vehicle is implemented by using a twist-lock buckle structure. That is, by rotationally adjusting the relative positions of the positioning blocks and the positioning grooves, the positioning blocks and the positioning grooves can form a locked state or an unlocked state such that disassembly and assembly can be facilitated. Since the width of the locking section is gradually narrowed from the inlet such that the groove wall of the locking section can clamp the positioning block in an axial direction. Moreover, the positioning portion of the positioning block is embedded in the snap-fit groove of the positioning groove such that the positioning block and the positioning groove are in tight snap-fit with each other in a radial direction. In addition, the other end of the locking section is closed in the circumferential direction, so as to block the positioning block entering the positioning groove. In combination with the cambered snap-fit surface, limitation effects in the circumferential direction and the radial direction can be better. Thus, when the positioning block and the positioning groove are locked, the pipe body of the intake pipe and the filter sleeve can be stably connected and cannot be loosened and separated from each other in an axial direction, a circumferential direction and a radial direction in a situation of vibration. Moreover, noise caused by an unstable connection between the pipe body of the intake pipe and the filter sleeve can be avoided.

2. After the filter sleeve is connected to the pipe body of the intake pipe, the sealing ring located beside the plurality of positioning grooves can prevent the air containing impurities from entering from gaps between the positioning grooves of the pipe body of the intake pipe and the filter sleeve, thereby ensuring that the air entering from the intake pipe is filtered by the filter sleeve.

### Brief description of the drawings

FIG. 1 is a perspective view of an intake pipe structure of an all-terrain vehicle.
FIG. 2 is an exploded view of an intake pipe of an intake pipe structure of an all-terrain vehicle.
FIG. 3 is a partial enlarged view of portion A in FIG. 2.
FIG. 4 is a sectional view of an intake pipe of an intake pipe structure of an all-terrain vehicle.
FIG. 5 is a partial enlarged view of portion B in FIG. 4.
FIG. 6 is a partial sectional view of an intake pipe of an intake pipe structure of an all-terrain vehicle.

In the drawings, 1, pipe body; 1a, intake end; 1b, mounting groove; 2, positioning groove; 2a, guide section; 2b, locking section; 3, filter sleeve; 4, positioning block; 4a, positioning portion; 4b, inclined surface; 5, snap-fit groove; 6, snap-fit surface; and 7, sealing ring.

### Detailed description

The following are specific embodiments of the present disclosure and the technical solutions of the present disclosure are further described with reference to the accompanying drawings, but the present disclosure is not limited to these embodiments.

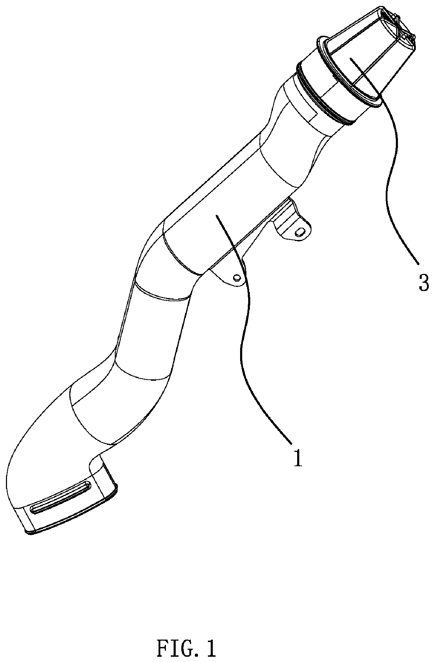

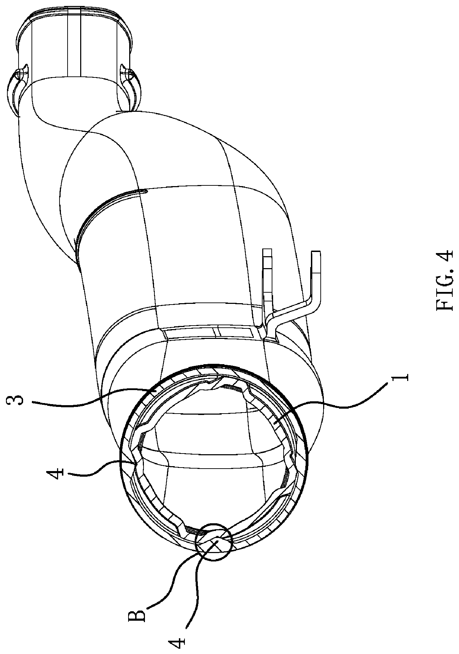

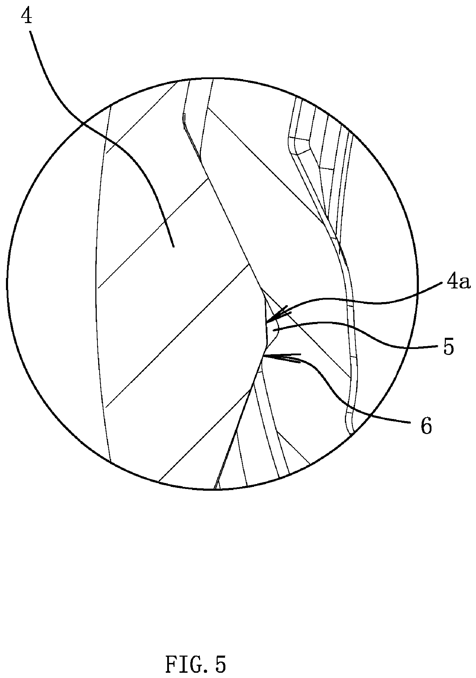

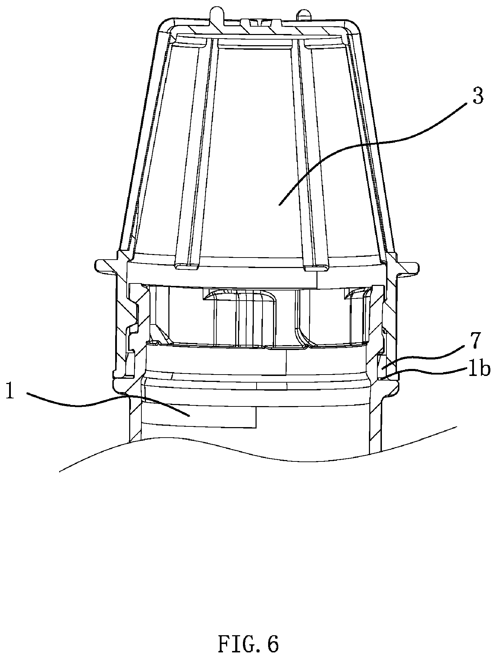

An intake pipe structure of an all-terrain vehicle, with reference to FIG. 1-FIG. 6, includes a pipe body 1 and a filter sleeve 3 arranged on the pipe body 1. A plurality of positioning grooves 2 are provided on the pipe body 1a. A plurality of positioning blocks 4 are arranged on the filter sleeve 3. The plurality of positioning grooves 2 are distributed on an outer wall of an intake end 1a of the pipe body 1 in a circumferential direction. The plurality of positioning blocks 4 are distributed on an inner wall of the filter sleeve 3 in a circumferential direction. The positioning blocks 4 are capable of being embedded in or separated from the positioning grooves 2. By rotationally adjusting relative positions of the positioning blocks 4 and the positioning grooves 2, a locked state or an unlocked state is capable of being form between them.

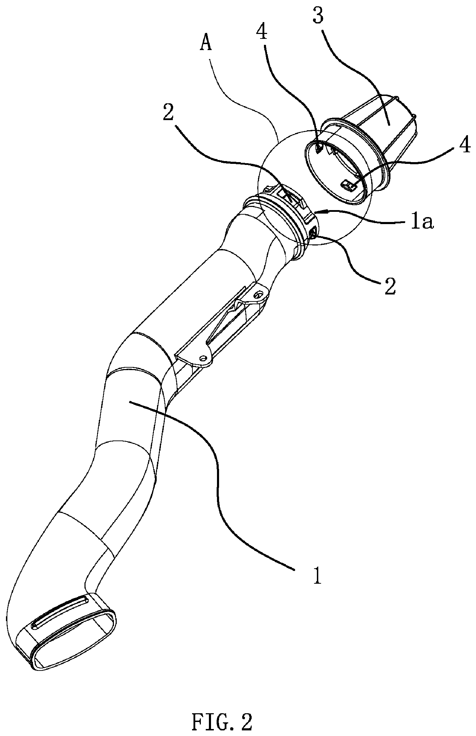

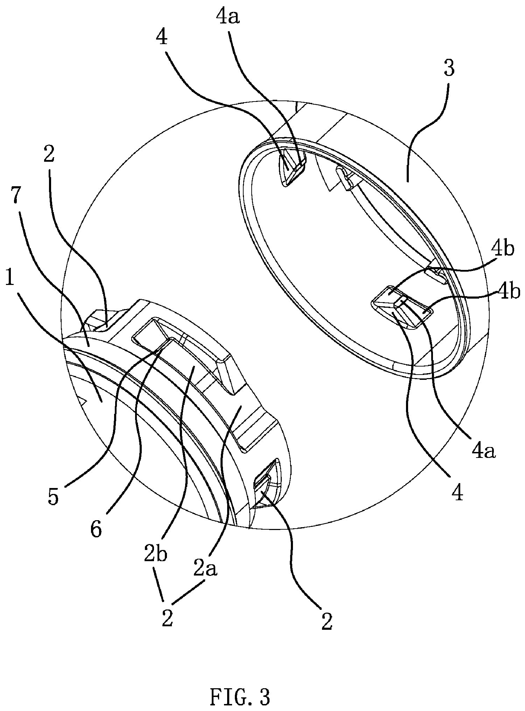

Specifically, with reference to FIG. 2 and FIG. 3, the positioning groove 2 includes an L-shaped guide section 2a and a linear locking section 2b connected to each other. A width of the locking section 2b is gradually narrowed from an inlet. An inlet of the guide section 2a extends to an edge of the intake end 1a of the pipe body 1.

Further, with reference to FIG. 2 and FIG. 3, the inlet end of the locking section 2b is opened, and the other end is closed. An end wall of the closed end is inclined relative to a groove bottom of the locking section 2b. In this case, preferably, the end wall of the closed end is gradually inclined away from a side of the locking section 2b of the same positioning groove 2 in a direction away from an axis of the pipe body 1. A snap-fit groove 5 is recessed at a joint between them. The positioning block 4 is provided with a positioning portion 4a which is capable of being embedded in the snap-fit groove 5, and the positioning portion 4a is capable of being separated from the snap-fit groove 5 under an action of an external force. The positioning portion 4a in the embodiment is merely a small portion of the positioning block 4. After the positioning block 4 is embedded in the snap-fit groove 5, the entire pipe body 1 is in interference fit with the filter sleeve 3.

More further, with reference to FIG. 2, FIG. 3, FIG. 4 and FIG. 5, the positioning block 4 is provided with inclined surfaces 4b located on two sides of the positioning portion 4a respectively. A cambered snap-fit surface 6 is arranged at a joint between the snap-fit groove 5 and the groove bottom of the locking section 2b. When the positioning portion 4a is embedded in the snap-fit groove 5, one side wall of the positioning block 4 abuts against the end wall of the closed end of the locking section 2b, and the other side wall abuts against the snap-fit surface 6. In addition, in the embodiment, the inclined surfaces 4b on the two sides of the positioning portion 4a smoothly transition with a surface of the positioning block 4. An arrangement of this structure matches the end wall of the closed end arranged in an inclined manner such that when an operator rapidly tightens the pipe body 1 and the filter sleeve 3, even if a final position slightly goes beyond a limit due to an excessive force, the positioning portion 4a can be smoothly returned to the snap-fit groove 5 under actions of the inclined surfaces 4b. Moreover, through the slight return indication and a hand feeling of operation produced when the positioning portion 4b enters the snap-fit groove 5, the operator can be reminded that the positioning portion passes beyond a limit position and smoothly returns to a correct position.

Furthermore, with reference to FIG. 2, FIG. 3, and FIG. 6, a mounting groove 1b is recessed on the outer wall of the intake end 1a of the pipe body 1. The mounting groove 1b is located beside the plurality of positioning grooves 2. A sealing ring 7 is arranged in the mounting groove 1b. The sealing ring 7 abuts against the inner wall of the filter sleeve 3.

In the embodiment, preferably, the plurality of positioning grooves 2 are evenly distributed on the outer wall of the intake end 1a of the pipe body 1 in the circumferential direction. The plurality of positioning blocks 4 are evenly distributed on the inner wall of the filter sleeve 3 in the circumferential direction. The sealing ring 7 is preferably a sponge sealing strip. The sponge sealing strip has excellent resilience, sealing performance, cold resistance and aging resistance, and long service life.

In use, firstly, the plurality of positioning blocks 4 on the filter sleeve 3 are aligned with the inlets of the guide sections 2a of the positioning grooves 2 on the intake pipe body 1 respectively one by one. Then, the filter sleeve 3 is moved in a direction close to the pipe body 1 such that the positioning blocks 4 can enter the guide sections 2a of the positioning grooves 2. By rotating the filter sleeve 3, relative positions of the positioning blocks 4 and the positioning grooves 2 are adjusted such that they form a locked state (in the locked state, positioning portions 4a of the positioning blocks 4 are snap-fitted in the snap-fit grooves 5). During disassembly, the filter sleeve 3 is reversely rotated such that the positioning portions 4a of the positioning blocks 4 are separated from the snap-fit groove 5. The filter sleeve 3 is continuously rotated such that the positioning blocks 4 are returned to the guide sections 2a from the locking sections 2b. Finally, the filter sleeve 3 is moved in a direction away from the pipe body 1 such that the positioning blocks 4 are separated from the inlets of the guide sections 2a.

The specific embodiments described herein are merely illustrative of the spirit of the present disclosure. Those skilled in the art to which the present disclosure belongs may make various modifications or supplements or similar substitutions to the specific embodiments described without departing from the spirit of the present disclosure or being beyond the scope defined by the appended claims.

## Claims

1. An intake pipe structure of an all-terrain vehicle, comprising a pipe body (1) and a filter sleeve (3) arranged on the pipe body (1), **characterized in that**, a plurality of positioning grooves (2) are provided on the pipe body (1a), a plurality of positioning blocks (4) are arranged on the filter sleeve (3), the plurality of positioning grooves (2) are distributed on an outer wall of an intake end (1a) of the pipe body (1) in a circumferential direction, the plurality of positioning blocks (4) are distributed on an inner wall of the filter sleeve (3) in a circumferential direction, the positioning blocks (4) are capable of being embedded in or separated from the positioning grooves (2), and by rotationally adjusting relative positions of the positioning blocks (4) and the positioning grooves (2), a locked state or an unlocked state is capable of being formed between them.

2. The intake pipe structure of an all-terrain vehicle according to claim 1, **characterized in that**, the positioning groove (2) comprises an L-shaped guide section (2a) and a linear locking section (2b) connected to each other, a width of the locking section (2b) is gradually narrowed from an inlet, and an inlet of the guide section (2a) extends to an edge of the intake end (1a) of the pipe body (1).

3. The intake pipe structure of an all-terrain vehicle according to claim 2, **characterized in that**, an inlet end of the locking section (2b) is opened, the other end is closed, an end wall of the closed end is inclined relative to a groove bottom of the locking section (2b), a snap-fit groove (5) is recessed at a joint between them, the positioning block (4) is provided with a positioning portion (4a) which is capable of being embedded in the snap-fit groove (5), and the positioning portion (4a) is capable of being separated from the snap-fit groove (5) under an action of an external force.

4. The intake pipe structure of an all-terrain vehicle according to claim 3, **characterized in that**, the positioning block (4) is provided with inclined surfaces (4b) located on two sides of the positioning portion (4a) respectively, a cambered snap-fit surface (6) is arranged at a joint between the snap-fit groove (5) and the groove bottom of the locking section (2b), and when the positioning portion (4a) is embedded in the snap-fit groove (5), one side wall of the positioning block (4) abuts against the end wall of the closed end of the locking section (2b), and the other side wall abuts against the snap-fit surface (6).

5. The intake pipe structure of an all-terrain vehicle according to claim 1, 2, 3 or 4, **characterized in that**, a mounting groove (1b) is recessed on the outer wall of the intake end (1a) of the pipe body (1), the mounting groove (1b) is located beside the plurality of positioning grooves (2), a sealing ring (7) is arranged in the mounting groove (1b), and the sealing ring (7) abuts against the inner wall of the filter sleeve (3).
